# EUROPEAN PATENT SPECIFICATION

(11) **EP 2 120 087 B1**
(45) Date of publication and mention of the grant of the patent: **16.12.2015**
(21) Application number: 09000555.4
(22) Date of filing: 16.01.2009
(51) Int. Cl.: G02C 5/22

(54) **Elastic miniaturized hinge for flex temple**
Elastisches miniaturisiertes Scharnier für einen flexiblen Bügel
Charnière miniature élastique pour branche flexible

(30) Priority: 14.05.2008 IT TV20080072
(43) Date of publication of application: 18.11.2009
(73) Proprietor: IDEAL SRL, 32030 Quero (BL) (IT)
(72) Inventor: Montagner, Luciano, 31058 Susegana (TV) (IT)
(74) Representative: Dragotti, Gianfranco

(56) References cited:
- EP-A- 0 003 928
- EP-A- 1 617 276
- EP-A1- 1 359 458
- WO-A-2004/040355
- WO-A-2006/024221
- WO-A-2007/107474
- US-A1- 2007 089 268
- US-A1- 2008 192 199

## Description

This invention relates to an elastic miniaturized hinge for flex temple, with box provided with at least a guiding zone for the connection of the articulation to a seat joined to the front of the glasses.

### Domain

The invention finds particular application, if not exclusive, in the field of the production of components for flex-temples for frames of glasses and in the field of metallic small items for related hinges.

The temples, on their ends, at the opposite side in respect to the terminations, are provided with associated elastic hinges so-called "flex", from now on referred to as elastic hinge, in order to engage that part of the front of the glasses, properly called lug. Said predominant turnover or extra-opening of the temples, that in this way is defined as "flex-temple", obtained on both sides of the glasses, has the advantage to confer a greater fit, the glasses being more wearable and adaptable to the different anatomical conformations of each person. Moreover, it has the value to favour an effective absorption action of accidental impacts, avoiding an excessive stress of both the otherwise utilizable hinges and corresponding temples placed on the sides of the glasses.

### Drawbacks

The most spreaded elastic hinges, today look substantially complex, requiring excessive sizes in the components that collide with the present tendency to minimize the sizes themselves, in order to make the frame of the glasses more charming, with lower visual impact and lower weight.

It also happens that the required precision components are innumerable, and as a result, their assembly by the production unit, requires production time and costs.

The now mentioned circumstances have therefore induced the companies of the sector, to reach the implementation of elastic hinges, that, though being more reduced in size, offer a refined functionality aiming at the same time to reduce the components, facilitating their assembly, and reducing the costs.

On the contrary, the research of an exasperated size reduction originated a series of clearances and physiological slacks, such as rotation clearances, e.g. in the opened or closed position, or during the extra-opening movement, as well as vertical translation clearances in any working position.

### Prior art

FR2702573 (Chevassus) describes an elastic hinge. A box is included in it, inside of which a tie-rod is axially movable, one end of which is hingeable to the lug of the glasses, and one opposite end of which ends with a perpendicular section to form a shoulder. In this way a tie-rod is obtained, inside the box, provided with a longitudinal seat which houses a compression spring, one end of which is placed in abutment with said shoulder, while the opposite end, is arranged in abutment with a second striker, obtained at the end of a guiding rod coaxially introduced in said spring. The guiding rod, on the opposite side, is provided with a particular wedge-shaped head, intended to be butted in a corresponding receptacle obtained by a second portion, which is longitudinally developed and integral with the tie-rod. This portion is provided along one side with a spike which, being protruding towards the intrados of the box, during the assembly, engages in one corresponding seat, realizing a stable constraint between the tie-rod and the box in order to prevent the extraction of said tie-rod.

IT1288611 (Montagner) describes an elastic hinge for glasses temples, essentially comprising a box, being associated, when finished, to the temple by means of a tacking and preassembled, inside of which two springs are housed, said springs being on one side with their ends in abutment to the bottom of the box, and on the other side being arranged in abutment to the end of a tie-rod, respect to which they are arranged one for each side; and in which the shape of the tie-rod is substantially "T" shaped provided at the opposite end with a convenient hole, hingeable to a corresponding lug provided on the frame of the glasses.

EP0679920 (OBE-Werk) provides three solutions for elastic hinges. A first one is characterised by the presence of a tie-rod coaxial to a spring, placed axially with respect to a box opened along one side, on the end of said tie-rod means being ensured acting as rabbet for an end of a compression-spring. The opposed end of the aforementioned spring engages at a shoulder obtained inside of the box, in such a way that, during the application of the tie-rod in the room of the same, the spring is submitted to a precompression and held in this condition. A second provision shows a monolithic realization of the tie-rod with a "L" shape, which, in the intermediate position, holds the related spring during the assembling in the so obtained housing and similarly holds the related spring in a precompression condition. Finally, a third tie-rod solution is recalled, always of the monolithic type. The latter, apart from the traditional flat head of the hinge, provided with a related hole, provides a body, having a quadrilateral section, or longitudinally protruding shank ending with a transverse portion. Some particular springs are obtained perpendicularly developing on the sides, that is along the sides of said shank, and integral with the same, said springs being obtained from a plate whose shape looks like an undulated sequence.

The company Comotec, www.comotec.com proposes a hinge model called Optimum Flex, that suggests a box with a prolongation along one side to constitute a protrusion insinuating between the two walls of the lug joined to the front of the glasses. It looks like it is a device substantially conceived to avoid the torsional oscillations of the hinge in working conditions of the articulation.

EP0003928 (Lamy) describes a spring-loaded hinge for spectacle frame comprising a male hinge pin having a partially screw-threaded extension adapted to slide in a socket formed with a bore parallel to the spectacle frame side to which said socket is to be fastened, said extension comprising resilient return means adapted to limit its permissible stroke, characterized in that said sliding extension is a cylindrical rod consisting of at least two concentric sections of different diameters separated by a small curved convex moulding, one end of said rod constituting the male hinge pin or having a substantially square configuration so that it can fit in a blank constituting said male hinge pin, the opposite end of said rod being screw-threaded, and by the fact that the socket bore comprises two sections separated by a bearing portion; matching said moulding, the diameter of one of said two sections of said socket bore being greater than that of the section of rod having the minor diameter and that of the other section being greater than the outer diameter of a washer, a coil spring and a cylindrical nut.

WO2006/024221 (Chan et al.) describes a spring hinge for eyeglasses includes a box, a joint at least partially received in the box and projecting out of an end of the box, at least one spring placed in the box and a closing element fixed at the end of the box for confining the joint and the spring in the box. The present spring hinge has dimensions particularly reduced, and thus can be applied as some miniature spring hinge. Besides, the elements can be assembled separately without preassembly by machine, and in fact can be conveniently and easily assembled manually. Due to a closed bottom of the box, the soldering operation becomes very easy, and avoids problems caused during plastic injection or galvanic treatment that the hot liquid plastic or the galvanic solution can filter into the box. The box can be made of any possible material because it has no friction with other elements.

EP1359458 relates to a spectacle frame comprising at least one lens engaging frame member having end pieces projecting outside a peripheral edge of each of a pair of lenses and a pair of temple members each having an end piece pivotally connected with one of the end pieces of said frame member by a hinge assembly comprising first and second hinge members for connection with said frame and temple member end pieces, respectively, said first and second hinge members being pivotally interconnected to confine movement of each temple member substantially to rotational movement about a single axis of rotation between an open position of use and a folded position with the temple members extending substantially parallel to the pair of lenses.

It is therefore reasonable to consider known the elastic hinge that includes:
- a box along the temple or lug of the glasses;
- a housing along the box containing the articulation trolley;
- the articulation trolley, which includes at least one spring and is housed inside of the box, while the portion including the articulation exits from the front end of the box;
- a corresponding seat, obtained on the front of the glasses, to which the articulation is hinged.

### Drawbacks

The described solutions originate, particularly in correspondence of the articulation, a series of clearances and physiological slacks, such as rotation clearances, e.g. in the opened or closed position, or during the extra-opening movement, as well as vertical translation clearances in any working position.

As a whole, from these introductive considerations, one can perceive how important it is to find alternative solutions.

Therefore, an aim of this invention is also to avoid the above-mentioned drawbacks.

### Abstract of the invention

This and other aims are achieved by the present invention according to the subject-matter of independent claim 1, solving the abovementioned problems by means of an elastic miniaturized hinge for flex temples, with a box provided with at least a guiding zone for the connection of the articulation to a seat joined to the front of the glasses, including:
- a box, along the temple or lug of the glasses;
- a housing along the box containing the articulation trolley;
- the articulation trolley, which includes at least one spring and which is contained inside of the box, while the portion that includes the articulation exits from the front end of the box;
in which, peripherally with respect to the opening of the housing obtained at the front end of the box, at least one guiding zone is obtained, said guiding zone consisting of a cheek of a protrusion longitudinally projected with respect to the box, where said cheek is parallel and orientated toward at least one of two lateral faces of the articulation, and furthermore in which said protrusion is provided with a guiding seat with opening along the front profile and longitudinally projected with respect to the sliding longitudinal axis of the articulation trolley.

### Aims

In this way, by means of the considerable creative contribution which effect constitutes an immediate technical progress, different aims and advantages are achieved.

The connecting element that can be a screw, a pin, or a stud, is guided by the guiding zones/seats of the cheeks located on the box. In particular the object of the present invention is substantially different with respect to what is described and represented in EP0003928. The latter provides protrusions indicated with (31) whose internal cheeks have the function to drive the flat faces of the articulation (10) only, but do not have the function to drive the connecting element which can consist of a pin or a screw passing through the hole of the articulation indicated with (11). In Figure 1 of EP0003928 (Lamy) one can understand that the connecting element in an inserted condition across the hole of the articulation indicated with (11) not only cannot be guided but it is even not in contact with the protrusions indicated with (31), due to the fact that the size of the hole itself indicated with (11) is such that, when introducing a screw having a coherent diameter, it remains however displaced from the head of said protrusions indicated with (31). Differently, the object of the present invention provides protrusions, each protrusion having a guiding zone which includes a guiding seat with an opening which is obtained along the front border and two internal cheeks, the one facing the other among which, in a hinge mounted condition the two parallel and opposite flat faces of the articulation are arranged and in which, in a hinge mounted condition, each flat face looks towards and is positioned against the corresponding cheek.

The guiding seats allow an easier insertion of the joining element in the system itself, for example in the traditional system with a screw, its insertion is very simplified. Other advantages are listed below in the paragraphs [0022] - [0028]:

Possibility to eliminate the seat that avoids the axial rotation of the articulation, because this one is replaced by the guiding system.

Greater resistance of the system in the closing, opening and extra-opening movement, as the system allows having the sliding elements guided in any position.

Greater resistance to the side bendings for the same reasons of the previous point.

Possible application on products with any size even very big because, unlike the mechanisms at present on the market, to an increasing in the height of the product corresponds in the same extent to an increasing in the precision of the mechanism.

Possibility to avoid having to leave the articulation slide on a contacting surface, as sometimes at present one recurs to in order to contain the clearances, because the guiding system makes its realization superfluous.

Possibility to use the guiding zones as contact points to limit the strokes, both, the opening, the closing and the extra-opening strokes.

Possibility to use the guiding zones for the housing of springs, studs or related seats, in order to have a considerable reduction of the size of the hinge.

The guiding zones may neither be in contact with the articulation, e.g. obtaining four tongues on the external element, being it both the hinge, the lug, the temple or another one.

These and other advantages will appear from the following detailed description of a preferred embodiment with the aid of the enclosed schematic drawings whose embodiment details are not to be considered limitative but only illustrative.

### Content of the drawings

- Figure 1 represents an exploded view of a first embodiment of the elastic hinge.
- Figure 2 represents an exploded view of a second embodiment of the elastic hinge.
- Figure 3 represents an exploded view of a third embodiment of the elastic hinge.
- Figure 4 represents a view from the bottom of the embodiment of the elastic hinge as for Figure 1.
- Figure 5 represents a partial view from the top of the hinge as for figures 1 and 4.

### Practical embodiment of the object of the invention

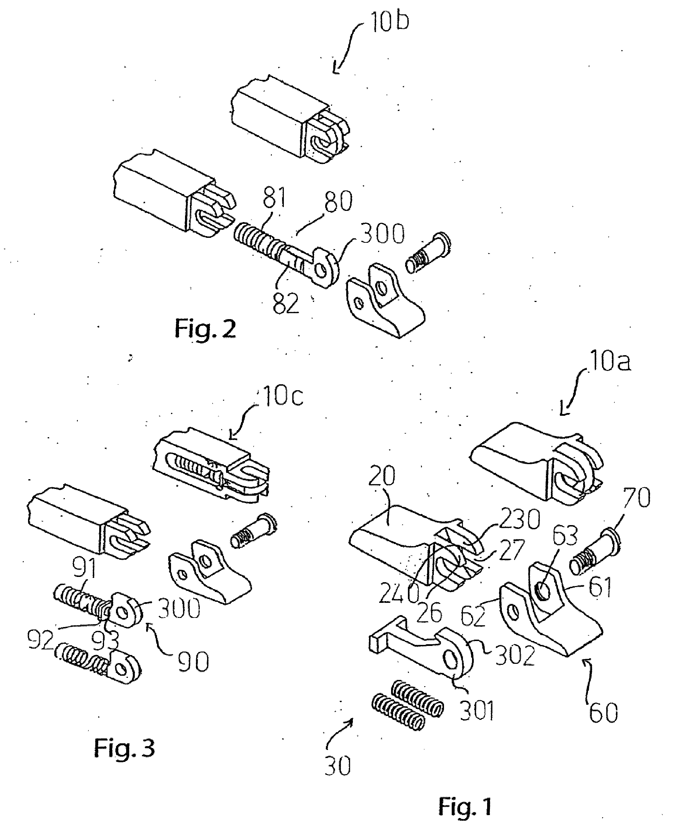

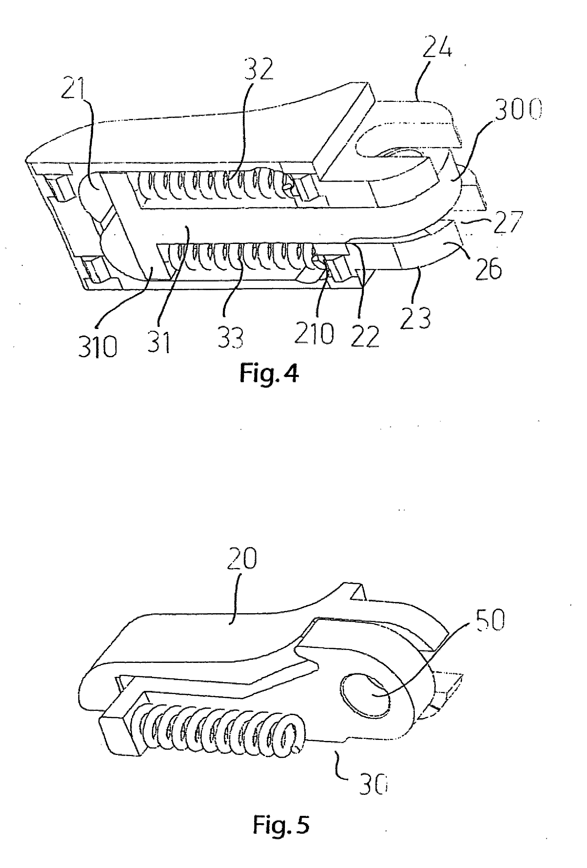

A first embodiment of the elastic hinge (10a) (Figg. 1, 4 and 5), to make flexible a flex temple, in a frame for glasses, is composed of a box (20), sidelong opened, inside of which a housing (21) is obtained to contain the trolley (30) of the articulation (300). The box (20) at the front part is provided with an opening (22) through which the articulation (300) of the trolley (30) exits, and from the sides of which two parallel protrusions (23, 24) longitudinally protract. Each protrusion (23, 24) of the box (20) presents a guiding zone, that in this case includes two internal cheeks (230, 240) the one facing the other, among which, in a hinge mounted condition (10a), the two parallel and opposite flat faces (301, 302) of the articulation (300) are arranged. In a hinge (10a) mounted condition, each flat face (301, 302) look towards and is positioned against the corresponding cheek (230, 240). In a further embodiment a self-lubricating element with low friction coefficient may be interposed between the flat face (301, 302) and the corresponding cheek (230, 240). Furthermore, one can observe that each protrusion (23, 24) is provided with a channel-shaped guiding seat or slot (27) which is longitudinally projected with respect to the sliding longitudinal axis the of the trolley (30) of the articulation (300). More in detail, each protrusion (23, 24) has the guiding seat (27) with an opening obtained along the front border (26). In a hinge (10a) condition with the trolley (30) of the articulation (300) assembled (Fig. 4), the articulation (300) is interposed between the two protrusions (23, 24), in such a way that the through-hole (50) corresponds to the guiding seats (27) of the two protrusions (23, 24).

The connection of the hinge (10a) to the lug (60) which is joined to the front of the glasses, is obtained inserting between the two parallel walls (61, 62) of the lug (60) both provided with a corresponding hole (63), the forepart of the box (20) and specifically the two protrusions (23, 24) among which the articulation (300) is interposed, providing the screw connecting element (70) to be passing through the corresponding hole (63) of at least one of the parallel walls (61, 62) and therefore through the guiding seat(27) of at least one of the protrusions (23, 24) engaging the articulation (300) which is hinged in the through-hole (50).

Concerning the trolley (30) of the articulation (300) (Fig. 4), it is of the type made of a tie-rod body (31) with a rectilinear development and with "T" shaped rear end to the sides of which two compression springs (32, 33) are arranged. Each of the springs (32, 33) is arranged with the rear end in abutment to the orthogonal portion (310) of the tie-rod body (31), while the front end engages against the internal wall (210) of the housing (21) containing the trolley (30) of the articulation (300).

Operatively, the hinge (10a), when the flex temple is stimulated in an extra-opening condition, causes the articulation (300) to perform a longitudinal movement with respect to the box (20) held by the guiding zones consisting of the concurrence of internal cheeks (230, 240) and of the corresponding guiding seat (27) that controls the movement of the transverse screw (70) for the fixing to the lug (60) of the front portion.

In the embodiment of figure 2, a variant of the hinge (10b) is shown in which a different design of the trolley (80) of the articulation (300) is present. In this case the trolley (80), which is always contained inside of the box (20), is composed by a rectilinear tie-rod body which is coaxial with respect to a helicoidal spring (81), said spring (81) being with the rear end in abutment to the base of the tie-rod body, while at the front end said spring (81) engages against the shoulder of the stop portion (82) that precedes the articulation (300).

Another variant of the hinge (10c) is represented by the embodiment of figure 3. In this case, the design of the trolley (90) of the articulation (300) is similar to the one of figure 2. More in detail the spring (91) at the front end engages against a blocking plate (92) which is transverse with respect to the stop portion (93) that precedes the articulation (300).

### Reference

(10a, 10b, 10c) elastic hinge
(20) box
(21) housing
(30) trolley
(300) articulation
(22) opening
(23, 24) protrusions
(230, 240) internal cheeks
(301, 302) flat faces
(27) Channel-shaped guiding seat
(26) front border
(50) through-hole
(60) lug
(61, 62) parallel walls
(63) hole
(70) joining element, screw
(31) tie-rod body
(32, 33) compression springs
(310) profile of the tie-rod body
(210) internal wall
(80) trolley
(81) helicoidal spring
(82) stop portion
(90) trolley
(91) spring
(92) blocking plate

## Claims

1. An elastic miniaturized hinge (10a, 10b, 10c) for use with a flexible temple of eyeglasses, the hinge comprising:
- a box (20), suitable for affixing to the temple of the eyeglasses, said box (20) being provided at its front end with an opening (22);
- a lug (60) configured to be joined to the front of the eyeglasses;
- a housing (21) formed in said box, said housing (21) comprising a trolley (30, 80, 90) composed of a tie-rod body;
- said trolley (30, 80, 90) having an articulation (300) at one end thereof and said articulation (300) extending outwardly of the opening (22) and having a through-hole (50);
- at least one spring (32, 33, 81, 91) positioned in said housing (21) and bearing against said trolley (30, 80, 90); and
- a guiding zone formed peripherally at said opening (22) of said housing (21), said guiding zone having a first protrusion (23) and a second protrusion (24) in spaced parallel relationship to each other and extending longitudinally outwardly therefrom, said first protrusion (23) having a cheek (230) facing a cheek (240) of said second protrusion (24), said articulation (300) having a first lateral face (301) and a second lateral face (302) on opposite sides thereof, said first lateral face (301) looking towards and being positioned against said first cheek (240) of said first protrusion (24), said second lateral face (302) looking towards and being positioned against second said cheek (230) of said second protrusion (23); **characterized in that**
- the lug (60) has two parallel walls (61, 62), both provided with a corresponding hole (63); each of said first and second protrusions (23, 24) has a channel-shaped guiding seat or slot (27) formed therein, said channel-shaped guiding seat or slot (27) being longitudinally projected with respect to the sliding longitudinal axis of the trolley (30, 80, 90) and said guiding seat (27) having an opening along the front border (26) of the protrusion (23, 24) in such a way that, when the articulation (300) is connected to the lug (60) by inserting, between the walls of the lug (60), the two protrusions (23, 24), a connecting element (70) passing through the holes (63) and the guiding seats (27) engages the articulation (300) which is hinged in the through-hole (50).

2. The hinge of claim 1 wherein the trolley (30) has its tie-rod body with a T-shape at a rear end thereof, said at least one spring comprises a pair of compression springs (32, 33) having a rear end bearing on said T-shape of said tie-rod body, said pair of compression springs (32, 33) has a front end bearing against an internal wall at a front end of the housing (21).

3. The hinge of claim 1, wherein the trolley (80) has a rectilinear tie-rod body, said at least one spring is a helicoidal spring (81), said tie-rod body is coaxial with said helicoidal spring, said helicoidal spring (81) has a rear end bearing against a rear end of said tie-rod body, said helicoidal spring (81) has a front end bearing against a shoulder of a stop portion (82) formed forward of said rear end of said tie-rod body.

4. The hinge of claim 1, wherein said at least one spring (91) has a front end which engages a blocking plate (92) extending transversely with respect to a stop portion (93) of the trolley (90) which precedes the articulation (300).

## Patentansprüche

1. Elastisches miniaturisiertes Scharnier (10a, 10b, 10c) zur Verwendung mit einem flexiblen Bügel einer Brille, wobei das Scharnier umfasst:
ein Behältnis (20) geeignet zum Befestigen an dem Bügel der Brille, wobei das Behältnis (20) an dessen vorderem Ende eine Öffnung (22) aufweist;
einen Ansatz (60), der ausgestaltet ist zum Anbringen an der Vorderseite der Brille;
ein in dem Behältnis geformtes Gehäuse (21), wobei das Gehäuse (21) einen aus einer Zugstange zusammengesetzten Wagen (30, 80, 90) umfasst;
wobei der Wagen (30, 80, 90) an dessen einem Ende eine Gelenkverbindung (300) aufweist und die Gelenkverbindung (300) aus der Öffnung (22) nach außen hervortritt und eine Durchgangsöffnung (50) aufweist;
zumindest eine in dem Gehäuse (21) angeordnete und gegen den Wagen (30, 80, 90) drückende Feder (32, 33, 81, 91); und
eine peripher an der Öffnung (22) des Gehäuses (21) gebildete Führungszone, wobei die Führungszone einen ersten Vorsprung (23) und einen zweiten Vorsprung (24) aufweist, die in paralleler Beziehung zueinander beabstandet sind und sich von dieser longitudinal nach außen erstrecken, wobei der erste Vorsprung (23) eine Wange (230) aufweist, die einer Wange (240) des zweiten Vorsprungs (24) gegenüberliegt, wobei die Gelenkverbindung (300) eine erste laterale Oberfläche (301) und eine zweite laterale Oberfläche (302) auf deren gegenüberliegenden Seiten aufweist, wobei die erste laterale Oberfläche (301) gerichtet ist auf und positioniert ist gegen die erste Wange (240) des ersten Vorsprungs (24), wobei die zweite laterale Oberfläche (302) gerichtet ist auf und positioniert ist gegen die zweite Wange (230) des zweiten Vorsprungs (23); **dadurch gekennzeichnet, dass**
der Ansatz (60) zwei parallele Wände (61, 62) aufweist, die beide eine entsprechende Öffnung (63) aufweisen;
wobei jeder der ersten und zweiten Vorsprünge (23, 24) einen darin geformten kanalförmigen Führungssitz oder -schlitz (27) aufweist, wobei der kanalförmige Führungssitz oder -schlitz (27) longitudinal bezüglich der longitudinalen Gleitachse des Wagens (30, 80, 90) hervorsteht und der Führungssitz (27) eine Öffnung entlang der Vordergrenze (26) des Vorsprungs (23, 24) in solcher Weise aufweist, dass dann, wenn die Gelenkverbindung (300) durch Einfügen zwischen den Wänden des Ansatzes (60) mit dem Ansatz (60) verbunden ist, die beiden Vorsprünge (23, 24) ein durch die Öffnungen (63) geführtes Verbindungselement (70) und die Führungssitze (27) mit der in der Durchgangsöffnung (50) eingehängten Gelenkverbindung (300) im Eingriff stehen.

2. Scharnier nach Anspruch 1, wobei der Zugstangenkörper des Wagens (30) an dessen hinterem Ende T-förmig ist, wobei die zumindest eine Feder ein Paar von Kompressionsfedern (32, 33) umfasst, deren rückwärtiges Ende gegen die T-Form des Zugstangenkörpers drückt, wobei das Paar von Druckfedern (32, 33) ein gegen eine innere Wand an einem vorderen Ende des Gehäuses (21) drückendes vorderes Ende aufweist.

3. Scharnier nach Anspruch 1, wobei der Wagen (80) einen geradlinigen Zugstangenkörper aufweist, wobei die zumindest eine Feder eine Schraubenfeder (81) ist, wobei der Zugstangenkörper koaxial zu der Schraubenfeder ist, wobei die Schraubenfeder (81) ein gegen ein hinteres Ende des Zugstangenkörpers drückendes hinteres Ende aufweist, wobei die Schraubenfeder (81) ein vorderes Ende aufweist, das gegen eine Schulter eines Anschlags (82) drückt, der vor dem hinteren Ende des Zugstangenkörpers gebildet ist.

4. Scharnier nach Anspruch 1, wobei die zumindest eine Feder (91) ein vorderes Ende aufweist, das mit einer Blockierplatte (92) im Eingriff steht, die sich transversal in Bezug auf einen Anschlag (93) des Wagens (90) erstreckt, der sich vor der Gelenkverbindung (300) befindet.

## Revendications

1. Charnière miniaturisée élastique (10a, 10b, 10c) destinée à être utilisée avec une branche flexible de lunettes, la charnière comprenant :
une boîte (20) appropriée pour être fixée à la branche des lunettes, ladite boîte (20) étant prévue au niveau de son extrémité avant, avec une ouverture (22) ;
une patte (60) configurée pour être assemblée à l'avant des lunettes ;
un logement (21) formé dans ladite boîte, ledit logement (21) comprenant un chariot (30, 80, 90) composé d'un corps de tirant ;
ledit chariot (30, 80, 90) ayant une articulation (300) au niveau de son extrémité et ladite articulation (300) s'étendant vers l'extérieur de l'ouverture (22) et ayant un trou débouchant (50) ;
au moins un ressort (32, 33, 81, 91) positionné dans ledit logement (21) et s'appuyant contre ledit chariot (30, 80, 90) ; et
une zone de guidage formée de manière périphérique au niveau de ladite ouverture (22) dudit logement (21), ladite zone de guidage ayant une première saillie (23) et une seconde saillie (24) en relation espacée parallèle entre elles et s'étendant de manière longitudinale vers l'extérieur à partir de cette dernière, ladite première saillie (23) ayant une joue (230) faisant face à une joue (240) de ladite seconde saillie (24), ladite articulation (300) ayant une première face latérale (301) et une seconde face latérale (302) sur ses côtés opposés, ladite première face latérale (301) étant orientée vers et étant positionnée contre ladite première joue (240) de ladite première saillie (24), ladite seconde face latérale (302) étant orientée vers et étant positionnée contre ladite seconde joue (230) de ladite seconde saillie (23) ;
**caractérisée en ce que** :
la patte (60) a deux parois parallèles (61, 62), toutes deux prévues avec un trou (63) correspondant ;
chacune desdites première et seconde saillies (23, 24) a un siège ou une fente de guidage en forme de canal (27) formé(e) à l'intérieur de cette dernière, ledit siège ou ladite fente de guidage en forme de canal (27) faisant longitudinalement saillie par rapport à l'axe longitudinal coulissant du chariot (30, 80, 90) et ledit siège de guidage (27) ayant une ouverture le long de la bordure avant (26) de la saillie (23, 24) de sorte que, lorsque l'articulation (300) est raccordée à la patte (60) en insérant, entre les parois de la patte (60), les deux saillies (23, 24), un élément de raccordement (70) passant par les trous (63) et les sièges de guidage (27) met en prise l'articulation (300) qui est articulé dans le trou débouchant (50).

2. Charnière selon la revendication 1, dans laquelle le chariot (30) a son corps de tirant avec une forme de T au niveau de son extrémité arrière, ledit au moins un ressort comprend une paire de ressorts de compression (32, 33) ayant une extrémité arrière s'appuyant sur ladite forme de T dudit corps de tirant, ladite paire de ressorts de compression (32, 33) a une extrémité avant s'appuyant contre une paroi interne au niveau d'une extrémité avant du logement (21).

3. Charnière selon la revendication 1, dans lequel le chariot (80) a un corps de tirant rectiligne, ledit au moins un ressort est un ressort hélicoïdal (81), ledit corps de tirant est coaxial avec ledit ressort hélicoïdal, ledit ressort hélicoïdal (81) a une extrémité arrière s'appuyant contre une extrémité arrière dudit corps de tirant, ledit ressort hélicoïdal (81) a une extrémité avant s'appuyant contre un épaulement d'une partie de butée (82) formée vers l'avant de ladite extrémité arrière dudit corps de tirant.

4. Charnière selon la revendication 1, dans lequel ledit au moins un ressort (91) a une extrémité avant qui met en prise une plaque de blocage (92) s'étendant de manière transversale par rapport à une partie de butée (93) du chariot (90) qui précède l'articulation (300).
